# FASCICULE DE BREVET EUROPEEN

(11) **EP 4 500 143 B1**
(45) Date de publication et mention de la délivrance du brevet: **04.03.2026**
(21) Numéro de dépôt: 23720646.1
(22) Date de dépôt: 29.03.2023
(51) Int. Cl.: G01N 1/22, G01N 1/02

(54) **ENSEMBLE OPTIMISÉ POUR UNE DETECTION DE COMPOSÉS VOLATILS DANS UN FLUIDE GAZEUX, ET PROCÉDÉ**
OPTIMIERTE ANORDNUNG ZUM NACHWEIS FLÜCHTIGER VERBINDUNGEN IN EINEM GASFÖRMIGEN FLUID MIT EINEM DETEKTOR MIT EINEM SAUGROHR UND EINER DAMPFPROBENAHMEOPTIMIERUNGSVORRICHTUNG
OPTIMIZED ASSEMBLY FOR DETECTING VOLATILE COMPOUNDS IN A GASEOUS FLUID, COMPRISING A DETECTOR EQUIPPED WITH A SUCTION TUBE AND A VAPOUR-SAMPLING OPTIMIZATION DEVICE

(30) Priorité: 30.03.2022 FR 2202867
(43) Date de publication de la demande: 05.02.2025
(73) Titulaire: Commissariat à l'Energie Atomique et aux Energies Alternatives, 75015 Paris (FR); CNRS DÉLÉGATION CENTRE LIMOUSIN POITOU-CHARENTES (DR8), 45071 Orleans Cedex 2 (FR); Université de Tours, 37020 Tours Cedex 1 (FR)
(72) Inventeur: CLAVERIE, Nicolas, 37260 MONTS (FR); BUVAT, Pierrick, 37260 MONTS (FR); CASAS, Jérôme, 37020 Tours Cedex 1 (FR)
(74) Mandataire: Santarelli
(86) Numéro de dépôt international: PCT/FR2023/050447
(87) Numéro de publication internationale: WO 2023/187294

(56) Documents cités:
- US-A1- 2011 203 931
- US-A1- 2014 290 340
- US-A1- 2019 212 230

## Description

### DOMAINE TECHNIQUE

L'invention concerne la conception et la réalisation d'un ensemble optimisé pour une détection de composés volatils dans un fluide gazeux, qui comprend un détecteur de vapeurs par aspiration équipé d'un tube d'aspiration, et un dispositif d'optimisation de prélèvement de vapeurs. Ce dispositif permet l'optimisation du prélèvement de vapeurs pour la détection et l'identification de composés volatils dans l'air.

### TECHNIQUE ANTÉRIEURE

La détection de composés volatils (ou vapeurs) dans un milieu gazeux (généralement de l'air) est un enjeu majeur dans de nombreux domaines et dans certains domaines particuliers, comme par exemple dans les domaines de la détection d'explosifs et de la lutte contre le terrorisme ; il est en outre primordial d'être capable de détecter les vapeurs de certains composés en temps réel et avec une bonne sensibilité.

Les détecteurs de vapeurs portables, en particulier, sont les plus adaptés à des mesures sur le terrain, dans des environnements difficiles, ou dans des situations d'urgence.

Un exemple d'un détecteur de vapeurs portable pour la détection de composés explosifs est décrit dans le document **[1].** On peut notamment citer, comme exemple d'un tel détecteur, le détecteur de la marque T-REX^{™} de la société NBC-Sys.

Ce type de détecteur fonctionne en aspirant le milieu gazeux, qui est au contact de la cible à analyser, à l'aide d'un système de prélèvement, puis en faisant passer les vapeurs collectées dans une chambre de détection munie de plusieurs micro-capteurs.

En effet, les détecteurs de vapeurs portables utilisent, tout comme le détecteur T-REX^{™}, des micro-capteurs recouverts de matériaux spécifiques qui sont sensibles à certains composés cibles. Ces matériaux réagissent avec les vapeurs de composés, comme les explosifs, ce qui modifie certaines de leurs caractéristiques chimiques (masse, fluorescence, conductivité, etc.).

Le système de prélèvement est généralement un simple tube et une pompe d'aspiration. Ce système de prélèvement est efficace pour des mesures au contact ou à très faible distance de la source, mais n'est pas optimisé pour l'aspiration à grande distance.

Ainsi, dans les détecteurs portables de l'art antérieur, le système de prélèvement des vapeurs au moyen d'un simple tube et d'une pompe d'aspiration nécessite de réaliser le prélèvement de vapeurs au contact de la cible, ce qui impose à l'opérateur de prendre plus de risques en l'obligeant à se rapprocher de la cible. Cela réduit également les capacités de détection de ce type de détecteur pour la recherche d'une cible présente dans un grand volume d'un milieu gazeux, car cela oblige à réaliser un balayage de tout le volume du milieu gazeux pour se rapprocher suffisamment de la cible et ainsi détecter sa présence.

En effectuant des mesures de vélocimétrie par imagerie de particules (PIV pour « Particle Image Velocimetry » en anglais), les Inventeurs ont constaté que, avec le détecteur T-REX^{™} (qui, on le rappelle, utilise comme système de prélèvement un tube et une pompe d'aspiration), la vitesse d'aspiration devient négligeable au-delà de 4 cm de l'orifice d'entrée du tube.

Par ailleurs, il est démontré que l'aspiration au travers d'un tube n'est pas très directionnelle. Ainsi, sur les mesures de PIV, on constate que le milieu gazeux aspiré par le tube provient de toutes les directions, y compris de positions situées en deçà de l'orifice d'entrée du tube.

Pour un débit d'aspiration donné, on observe une décroissance hyperbolique de la vitesse du milieu gazeux aspiré en fonction de la distance à l'orifice d'entrée du tube. Cela conduit, pour tous les systèmes de prélèvement prélevant le milieu gazeux à l'aide d'un simple tube, à une portée d'aspiration de quelques centimètres au mieux, et au prélèvement du milieu gazeux tout autour de l'orifice d'entrée du tube et pas seulement au contact de la cible. Ce prélèvement du milieu gazeux environnant dilue les vapeurs captées et affaiblit le signal mesuré par le détecteur.

Les stratégies d'olfaction du monde animal sont régulièrement étudiées et sont source d'inspiration.

Ainsi, les auteurs du document **[2]** ont tenté d'imiter le mode d'olfaction du chien qui possède des narines de formes asymétriques pour alternativement inspirer et expirer l'air proche du sol. Ce flux oscillant, couplé à la forme des narines du chien, crée un flux d'air intermittent qui soulève les particules et les guide vers le nez de l'animal, ce qui facilite leur détection. Ce principe de fonctionnement a servi d'inspiration à la conception d'un système de prélèvement de particules d'explosifs de type IMS (pour « lon Mobility Spectrometry » en anglais) pour lesquels les intensités des signaux de détection sont sensiblement augmentées, mais restent faibles dès que le détecteur n'est pas au contact de la cible.

La stratégie d'olfaction mise en œuvre par l'écrevisse a également fait l'objet de nombreuses études. L'écrevisse détecte les odeurs dans l'eau grâce à ses antennes. Afin d'améliorer la portée de détection, l'écrevisse agite des appendices spéciaux en forme de palme pour créer des jets vers l'arrière qui entraînent l'eau devant l'animal, en direction des antennes. Ce principe de fonctionnement a servi d'inspiration aux auteurs du document **[3]** pour la conception d'un prototype de robot projetant de l'eau latéralement, ce qui améliore les capacités de détection du robot. Cependant, ce prototype ne fonctionne que dans l'eau.

Les systèmes de prélèvement détaillés ci-dessus n'apportent pas de réponses satisfaisantes au besoin d'améliorer la portée de détection de vapeurs dans un milieu gazeux (généralement l'air) des dispositifs de détection chimique par prélèvement (également appelés détecteurs par prélèvement).

Au vu de ce qui précède, il existe un besoin d'optimiser les capacités de prélèvement de vapeurs de tous types de détecteurs de vapeurs portables et de type T-REX^{™} en particulier.

Le document US2011/203931 décrit des dispositifs et des procédés d'échantillonnage de particules.

Le document US2014/29340 décrit un appareil d'échantillonnage de gaz et un appareil de contrôle.

Le document US2019/212230 décrit un échantillonnage aérodynamique de particules et de vapeur à partir de surfaces pour une analyse en temps réel.

### EXPOSÉ DE L'INVENTION

Pour répondre à ce besoin, l'invention a pour objet un ensemble optimisé (également appelé nez optimisé) pour une détection de composés volatils dans un fluide gazeux, selon les caractéristiques de la revendication 1.

De préférence, les moyens d'injection comprenant une pompe, la pompe utilisée pour aspirer le fluide gazeux dans l'enceinte et la pompe utilisée pour injecter du fluide gazeux dans l'embout est une seule et même pompe.

Avantageusement, les moyens d'injection comportent une pompe, configurée pour aspirer le fluide gazeux, et un tuyau flexible, en communication fluidique avec la pompe, pour relier la pompe à l'entrée de l'embout.

Ainsi, si le réseau fluidique ne comporte qu'une sortie, on comprend bien que pour qu'il y ait un jet de fluide gazeux qui puisse être éjecté de part et d'autre de la direction d'aspiration, il faudra que la sortie soit configurée pour le permettre. Cela est possible, par exemple, si elle a une forme d'anneau, ce qui permet la formation d'un cône de fluide gazeux éjecté autour de la direction d'aspiration (et on a donc bien un jet de part et d'autre de la direction d'aspiration). Bien sûr, le réseau fluidique peut comporter une pluralité de sorties (c'est-à-dire au moins deux) et dans ce cas, il y aura une pluralité de jets (au moins deux) qui seront formés.

De préférence, l'angle θ est compris entre 20° et 70°, bornes incluses.

De préférence, la surface de la section droite de l'entrée est supérieure ou égale à la somme des surfaces des sections droites de chaque sortie, de manière à obtenir des jets ayant un flux de sortie supérieur au flux d'entrée, i.e. un flux accéléré.

Selon une variante préférée, chaque jet forme un même angle θ, en valeur absolue, avec l'axe de la direction d'aspiration. Dans cette variante, chaque sortie est donc disposée à égales distances de l'ouverture du canal traversant, de part et d'autre de la direction d'aspiration. S'il y a plusieurs sorties, elles peuvent être dispersées autour de la direction d'aspiration, et être, par exemple, équidistantes les unes des autres.

Selon une variante, le réseau fluidique comprend au moins deux sorties, deux sorties étant positionnées à une même hauteur qu'une extrémité du canal traversant, le réseau fluidique étant configuré pour que les jets sortant de ces deux sorties appartiennent à un même plan, ledit plan comprenant également la direction d'aspiration.

Selon une autre variante, le réseau fluidique comprend au moins deux sorties et comporte un canal principal qui se divise en au moins deux canaux secondaires, dont deux canaux secondaires sont symétriques par rapport à un plan qui comporte le canal traversant. À titre d'exemple, le réseau fluidique peut comporter uniquement un canal principal et deux canaux secondaires.

Selon une variante, les canaux secondaires ont une section en coupe qui est constante.

Selon une autre variante, les canaux secondaires ont une section en coupe qui se réduit à proximité des sorties.

Les sorties peuvent avoir une forme elliptique, de préférence circulaire.

Selon une autre variante, la sortie est définie par une surface évidée entre deux formes concentriques et centrées sur le canal traversant, les deux formes étant des ellipses, de préférence des cercles, ou des polygones. À titre d'exemple, si les formes concentriques sont des cercles, la sortie a la forme d'un anneau. Les formes concentriques peuvent également, par exemple, être des carrés ou des rectangles.

L'invention a également pour objet un procédé d'optimisation d'un prélèvement de vapeurs pour détecter des composés volatils dans un fluide gazeux selon les caractéristiques de la revendication 11. Ainsi, le procédé selon l'invention comprend :
- la mise en place préalable du tube d'aspiration dans le canal traversant de l'embout ;
- la formation d'au moins un jet de part et d'autre de la direction d'aspiration par une aspiration du fluide gazeux dans l'enceinte à travers le tube d'aspiration et, simultanément, une injection du fluide gazeux dans l'entrée du réseau fluidique, ce qui provoque une éjection du fluide gazeux par ladite au moins une sortie sous la forme d'au moins un jet.

Avantageusement, l'aspiration et l'injection sont réalisées à l'aide d'une même pompe.

En formant des jets de fluide gazeux autour de la direction d'aspiration, on optimise la portée d'aspiration dans une direction privilégiée (qui est celle de la direction d'aspiration), ce qui permet d'améliorer la capacité de détection du détecteur de vapeurs.

### BRÈVE DESCRIPTION DES DESSINS

D'autres aspects, buts, avantages et caractéristiques de l'invention apparaîtront mieux à la lecture de la description détaillée suivante d'une forme de réalisation préférée de celle-ci, donnée à titre d'exemple non limitatif, et faite en référence aux dessins annexés sur lesquels :
- la figure 1 est un schéma du concept de l'invention, montrant un embout équipant un tube de prélèvement d'un détecteur de vapeurs par aspiration ;
- les figures 2a à 2c sont respectivement des vues de côté, de dessus et de face d'un premier exemple de réalisation d'un embout selon l'invention ;
- les figures 3a à 3c sont respectivement des vues de côté, de dessus et de face d'un deuxième exemple de réalisation d'un embout selon l'invention ;
- les figures 4a à 4c sont respectivement des vues de côté, de dessus et de face d'un troisième exemple de réalisation d'un embout selon l'invention ;
- les figures 5a à 5c sont respectivement des vues de côté, de dessus et de face d'un quatrième exemple de réalisation d'un embout selon l'invention ;
- la figure 6 est une représentation schématique, selon une vue en perspective, d'une face de l'embout munie d'une sortie de forme annulaire, permettant la formation d'un cône de fluide gazeux autour de la direction d'aspiration ;
- les figures 7a et 7b sont respectivement un schéma du banc de mesure de PIV selon une vue de côté en perspective et selon une vue de dessus ;
- la figure 8 est un modèle 3D d'un embout selon l'invention, superposé à une image obtenue par mesure de PIV ;
- les figures 9a et 9b sont des schémas représentant respectivement un embout selon l'invention et l'image obtenue par mesure de PIV dans un plan de mesure qui correspond à une mesure horizontale (figure 9a) et à une mesure verticale (figure 9b) ; dans ces deux plans de mesure, les lignes colorées représentent les mouvements du fluide (flux d'air) autour de l'embout ;
- la figure 10 représente les mouvements du fluide lors de l'aspiration de l'air au travers d'un simple tube d'aspiration ;
- les figures 11a et 11b représentent les mouvements du fluide lors de l'aspiration de l'air au travers d'un tube d'aspiration équipé d'un embout selon l'invention, mais sans que les jets d'air soient activés ;
- les figures 12a et 12b représentent les mouvements du fluide lors de l'aspiration de l'air au travers d'un tube d'aspiration équipé d'un embout selon l'invention, avec les jets d'air activés ;
- les figures 13a et 13b représentent la courbe de la vitesse de l'air en fonction de la distance à l'orifice d'entrée du tube d'aspiration selon une mesure horizontale (figure 13a) et une mesure verticale (figure 13b) selon que le tube d'aspiration est simple (courbe 2), avec embout sans jets (courbe 1) et avec embout avec jets (courbe 3).

### EXPOSÉ DÉTAILLÉ DE MODES DE RÉALISATION PARTICULIERS

Le dispositif d'aspiration optimisé selon l'invention permet, en utilisation conjointe avec un système de prélèvement classique (à savoir, un simple tube et une pompe d'aspiration) couramment utilisé dans les détecteurs de vapeurs existants, un prélèvement de vapeurs qui est directionnel et à plus grande portée qu'avec le système de prélèvement seul.

Ce dispositif d'aspiration optimisé peut être utilisé dans tous les détecteurs réalisant des prélèvements d'air, car il permet d'augmenter la portée et la précision de l'aspiration de l'air, sans changer le débit d'aspiration.

Ce dispositif d'aspiration optimisé peut en particulier être utilisé dans les détecteurs d'explosifs ou de produits toxiques portables fonctionnant par prélèvement de l'air ambiant au moyen d'un tube. Pour de tels détecteurs, le dispositif selon l'invention permet en effet d'augmenter la portée et la sélectivité du prélèvement de l'air ambiant, ce qui garantit une plus grande sécurité de l'opérateur du détecteur en lui permettant de garder une plus grande distance lors des prélèvements, mais aussi de limiter les perturbations de la cible à analyser.

Le système selon l'invention a pour principe la génération de jets d'air, en complément de l'aspiration classique au travers d'un tube. Ces jets d'air, en s'éloignant de l'axe d'aspiration du tube, créent une aspiration supplémentaire qui ramène les vapeurs à portée de l'orifice d'entrée du tube d'aspiration, où elles sont ensuite aspirées. De plus, si l'on considère un plan contenant l'axe d'aspiration et au moins deux jets, ces deux jets d'air vont bloquer l'aspiration de l'air dans les directions autre que dans l'axe d'aspiration, ce qui permet une aspiration plus ciblée. C'est la raison pour laquelle une configuration avec une multitude de jets sortant de sorties placées circulairement autour du canal traversant, avec un même angle θ, en valeur absolue, par rapport à l'axe d'aspiration, est une configuration particulièrement avantageuse. De préférence, une sortie de forme annulaire, par exemple, permet de générer un cône d'air expulsé autour de l'axe d'aspiration, et donc une aspiration sensiblement unidirectionnelle, ce qui est particulièrement avantageux.

De manière assez simple, ces jets sont générés en injectant de l'air, au moyen d'une pompe d'aspiration, dans un embout adapté qui se fixe sur le tube d'aspiration du détecteur de vapeurs, la configuration de l'embout étant optimisée pour définir des profils d'aspiration améliorés. De préférence, dans un souci de portabilité et de facilité d'adaptation aux détecteurs de vapeurs existants (et en particulier au détecteur T-REX^{™} pour lequel l'invention a été développée), on utilise la pompe interne du détecteur (utilisée pour aspirer l'air dans le détecteur) pour réinjecter l'air dans l'embout.

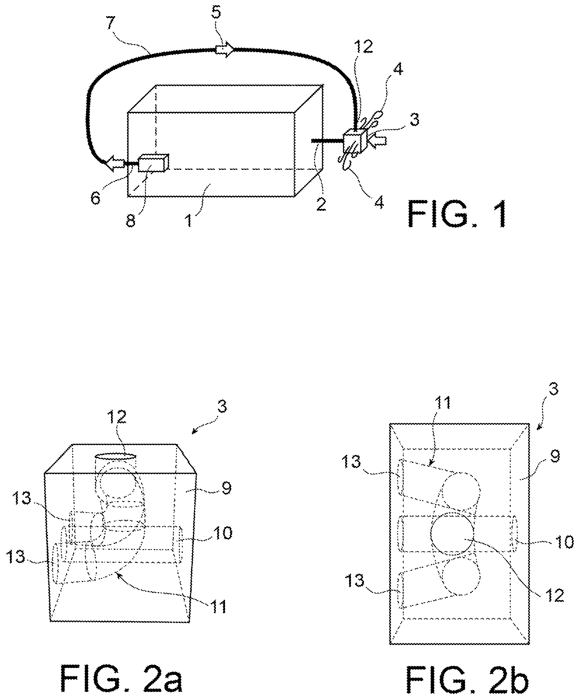

Le principe de fonctionnement d'un tel montage est illustré dans la figure 1.

La figure 1 présente un détecteur 1 de vapeurs par aspiration (par exemple le détecteur T-REX^{™}), qui est équipé d'un tube d'aspiration 2 qui permet d'aspirer de l'air dans une enceinte (non représentée) du détecteur au moyen d'une pompe 8. Un embout 3 est disposé sur une extrémité du tube 2. Un tuyau flexible 7 est disposé entre une sortie d'air 6 de la pompe 8 du détecteur et une entrée 12, pratiquée dans le corps de l'embout 3. Ainsi, de l'air est aspiré par la pompe du détecteur dans l'enceinte au travers du tube d'aspiration 2, et le tuyau flexible 7 redirige le flux d'air aspiré, sortant du détecteur par la sortie d'air 6, dans l'entrée 12 de l'embout où un réseau fluidique sépare le flux en plusieurs flux et l'accélère avant de le libérer sous forme de jets d'air 4 expulsés de part et d'autre du tube d'aspiration 2. Le trajet de l'air entrant dans le tube et circulant dans le tuyau flexible est illustré par des flèches larges 5.

L'embout du dispositif selon l'invention comporte un corps 15, ayant de préférence une forme parallélépipédique, avec éventuellement au moins deux angles tronqués. Cette forme parallélépipédique est pratique, mais le corps peut avoir d'autres formes.

L'embout est prévu pour s'insérer sur le tube d'aspiration du détecteur ; le corps de l'embout comporte donc un canal traversant 10, destiné à accueillir le tube d'aspiration, qui va aspirer les vapeurs. Le canal traversant est un conduit droit (rectiligne). Le canal traversant 10 est de préférence un tube de forme cylindrique dont le diamètre intérieur est légèrement supérieur au diamètre extérieur du tube d'aspiration 2.

L'embout peut être positionné à l'extrémité du tube, de sorte que l'orifice d'entrée du tube soit affleurant avec le corps de l'embout. L'embout peut également être positionné de manière à ce que l'orifice d'entrée du tube dépasse du corps de l'embout.

Le corps de l'embout comporte également un réseau fluidique 11, le réseau comprenant une entrée 12 (pour l'arrivée d'air issu d'une pompe d'aspiration, de préférence la pompe du détecteur) et une pluralité de sorties 13 qui sont en communication fluidique avec l'entrée 12 (ces sorties 13 permettant une sortie d'air expulsé à forte vitesse). Le réseau fluidique 11 peut se présenter sous de nombreuses configurations.

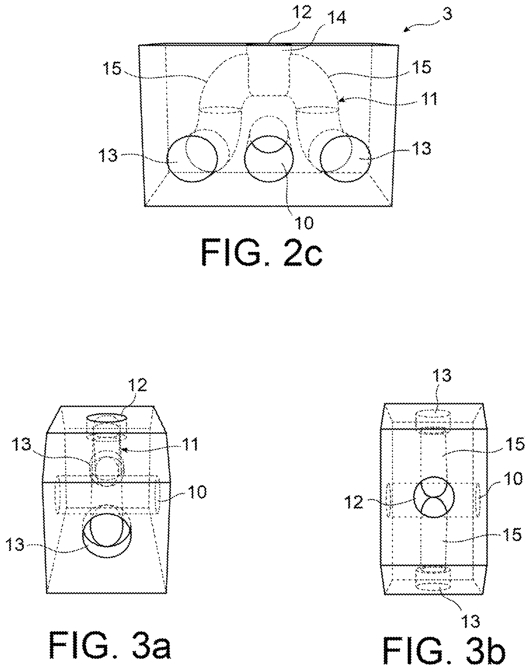

L'entrée 12 (par lequel le flux sortant de la pompe d'aspiration est amené dans le réseau fluidique) est située de préférence sur la face supérieure (comme illustré dans les figures 2 à 5 suivantes) ou inférieure du corps 9 de l'embout de manière à ne pas perturber les flux situés en face avant, mais peut tout aussi bien être située sur une autre face du corps.

Si le réseau fluidique comporte plus de deux sorties, les sorties 13 d'air peuvent prendre toutes formes géométriques (en particulier, disque, ellipse, etc.).

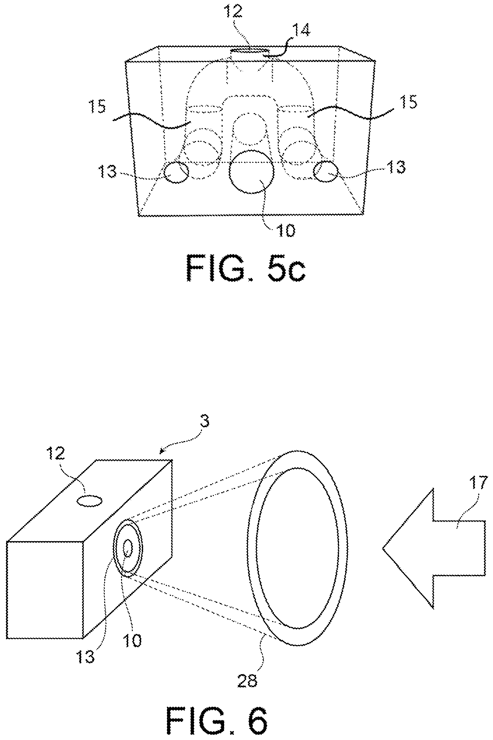

Si le réseau fluidique comporte une seule sortie 13, la sortie doit présenter une forme géométrique permettant la formation d'un jet sortant de part et d'autre de la direction d'aspiration. De préférence, cette forme géométrique est un anneau centré sur la direction d'aspiration, comme illustré dans la figure 6, permettant la formation d'un cône 28 autour de la direction d'aspiration 17.

Les figures 2a, 2b, 2c illustrent un exemple de configuration possible d'un embout à deux jets.

Sur ces figures 2a-2c, l'embout comporte un canal traversant 10, et un réseau fluidique 11 formé d'un canal principal 14 qui se divise en deux canaux secondaires 15 qui sont symétriques par rapport à un plan comprenant le canal traversant et le canal principal. Le flux d'air entre dans le corps de l'embout (et dans le canal principal 14 du réseau fluidique) par l'entrée 12 et sort sous forme de deux jets d'airs par les sorties 13. On peut voir par transparence, sur ces figures 2a-2c, la façon dont le flux d'air entrant est séparé en deux pour former deux jets d'air.

Dans cet exemple, le corps 9 de l'embout est de forme parallélépipédique, le canal traversant 10 traverse deux faces latérales opposées (ici les faces avant et arrière), le flux d'air entre par l'entrée 12 qui est présente sur la face supérieure du corps, et les sorties 13 des canaux secondaires débouchent sur la face avant, de part et d'autre du canal traversant 10. En outre, l'axe d'aspiration du canal traversant 10 est situé à la même hauteur (sur un même plan) que les sorties 13, et les sorties 13 sont à égales distances de l'axe du canal traversant. Cela permet d'améliorer l'aspiration dans le plan défini par les deux sorties et le canal traversant.

L'embout selon l'invention peut bien évidemment présenter d'autres configurations à deux jets, ou d'autres configurations à plus de deux jets, l'important étant de confiner l'air aspiré sur au moins deux côtés du tube d'aspiration, de préférence de manière symétrique. Par exemple, avec deux jets éjectés symétriquement de part et d'autre de la direction d'aspiration, on peut confiner l'air aspiré dans la direction d'aspiration. Selon un autre exemple, il est également possible d'avoir une configuration avec au moins trois canaux secondaires dont les sorties sont équidistantes les unes des autres et disposées à égale distance de la direction d'aspiration (aux trois sommets d'un triangle équilatéral avec le canal traversant situé au centre du triangle). De préférence, on cherche à augmenter le nombre de jets de manière à tendre vers une multitude jets dont l'ensemble définit un cône d'air projeté autour de la direction d'aspiration. Ce cône d'air projeté peut être un volume de forme pyramidale ou conique à sommet tronqué, ayant en section droite une forme annulaire ronde, elliptique, carrée, rectangulaire, etc. et dont les côtés s'écartent au fur et à mesure qu'on s'éloigne du sommet.

L'embout inclut notamment toutes les configurations permettant de faire varier les angles de sortie des jets d'air par rapport à la direction d'aspiration du tube (axe d'entrée de l'air aspiré par le tube).

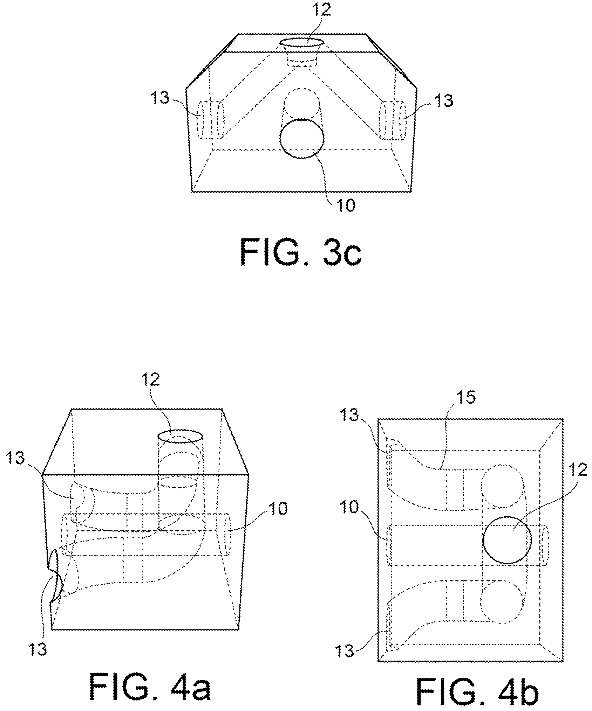

Un autre exemple de configuration possible à deux jets est illustré dans les figures 3a à 3c. Dans cet exemple, le flux d'air entre dans un canal principal et est divisé entre deux canaux secondaires qui débouchent sur les côtés du corps de l'embout, perpendiculairement à l'axe du canal traversant 10 (qui sera l'axe d'aspiration du tube d'aspiration, lorsque ce dernier sera inséré dans le canal traversant) et à la même hauteur.

Dans cet exemple, les deux jets d'air formés seront situés perpendiculairement à l'axe d'aspiration du tube d'aspiration.

Il est à noter que dans l'exemple de configuration illustré dans les figures 3a-3c, l'entrée et les deux sorties ont une forme circulaire, mais les canaux menant de l'entrée à chaque sortie présentent une portion ayant une section droite elliptique ; le diamètre de la forme circulaire est représenté égal à la dimension la plus grande de l'ellipse.

Les dimensions des différents orifices formés dans l'embout (entrée 12 et sorties 13), ainsi que le diamètre des canaux du réseau fluidique peuvent être de 6 mm, soit le diamètre externe du tube d'aspiration utilisé dans le détecteur T-REX^{™}.

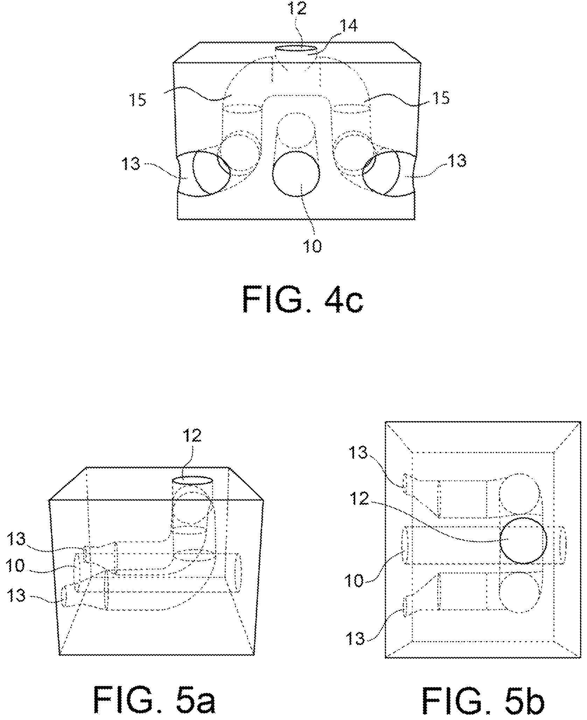

Un autre exemple de configuration possible est illustré dans les figures 4a-4c. Ici, les sorties 13 des deux canaux secondaires 15 débouchent sur la face avant du corps de l'embout, à la même hauteur que le canal traversant 10, et avec un angle de 45 degrés par rapport à l'axe du canal traversant 10.

Un dernier exemple de configuration possible est illustré dans les figures 5a-5c. Comme dans les exemples précédents, le corps de l'embout est équipé d'un canal traversant 10 pour le passage du tube d'aspiration des vapeurs à détecter, d'un orifice circulaire (entrée 12) dans la face supérieure du corps, pour l'arrivée de l'air à réinjecter, qui débouche sur un canal principal 14 qui se divise en deux canaux secondaires 15 symétriques, ces canaux secondaires ayant une portion finale dont le diamètre se rétrécit pour déboucher, dans la face avant du corps 9 de l'embout, par les sorties 13. Cette portion finale présente également un angle de 45 degrés par rapport à l'axe du canal traversant. Dans cet exemple, le diamètre des sorties a été réduit à 3 mm, contre 6 mm dans les exemples précédents afin de doubler la vitesse de sortie de l'air. Les deux jets d'air, dans cet exemple, ont donc une vitesse plus importante que dans les exemples précédents.

Dans les exemples ci-dessus, les orifices des sorties 13 ont une forme circulaire, mais ils peuvent tout à fait avoir une autre forme, par exemple une forme elliptique, carrée, rectangulaire, etc.

On précise que la structure 3D de l'embout (corps, canal transversal et réseau fluidique) peut être réalisée dans tout type de matériaux n'interférant pas avec les cibles à détecter. Le choix du matériau sera donc adapté à l'application. Par exemple, pour une détection de compositions pyrotechniques, l'embout pourra être réalisé en acide polylactique (ou PLA, de l'anglais polylactic acid). Par ailleurs, la structure 3D peut être de forme très complexe, notamment sa partie interne avec le réseau fluidique, mais sera facilement réalisable par impression 3D.

Une fois l'embout mis en place sur le tube d'aspiration d'un détecteur de vapeurs par aspiration, par exemple un détecteur T-REX^{™}, l'ensemble ainsi formé permet d'obtenir un nez encore plus performant que le détecteur seul.

Afin d'illustrer les performances du dispositif optimisé selon l'invention, un embout a été fixé sur un tube d'aspiration du détecteur T-REX^{™} et les flux d'aspiration générés par ce nez ont été mesurés par la méthode PIV.

La mesure de PIV a consisté à observer les mouvements de particules d'huile de DEHS (pour « Di-Ethyl-Hexyl-Sebacat » en anglais) en suspension dans de l'air contenu dans un espace fermé dans lequel on a placé le nez à étudier.

Le détecteur 1 T-REX^{™} a donc été placé dans une cuve 20 fermée à parois transparentes du type aquarium, afin que les gouttelettes utilisées pour la mesure des flux d'air ne s'échappent ou que les mouvements d'air extérieur ne perturbent pas les mesures. Le détecteur T-REX^{™} a été placé de manière à ce que l'extrémité du tube 2 d'aspiration soit située à plus de 12 cm de chaque paroi de la cuve pour limiter les effets de bord.

Le brouillard de gouttelettes de DEHS est dispersé et le flux de l'air stabilisé (le fluide gazeux résultant est désigné par la référence 27).

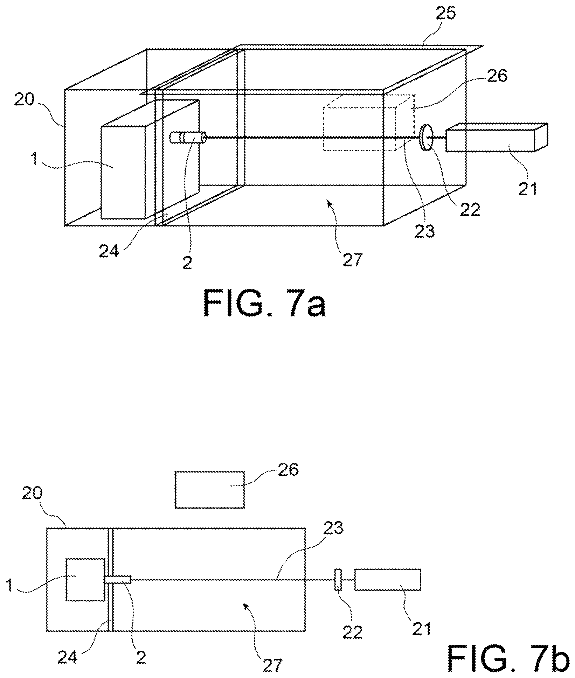

Un laser 21 (ici le laser à onde continue de puissance 2W de chez LaVision de référence VL-2W cw) et une lentille 22 cylindrique divergente de focale -10 mm ont été placés à l'extérieur de la cuve 20 dans l'axe du tube 2 d'aspiration du détecteur, afin de créer une nappe laser illuminant les gouttelettes en suspension. Le faisceau laser est désigné par la référence 23. Une caméra vidéo 26 à haute vitesse (ici le Phantom v9.1) a été placée perpendiculairement à l'installation (à l'extérieur de la cuve) pour filmer le mouvement des particules illuminées par le laser. Les figures 7a et 7b représentent respectivement des vues schématiques en perspective et vue de haut de ce banc de mesure.

Une paroi 24 (par exemple une plaque de mousse) est utilisée pour séparer la cuve en deux parties. Cela permet d'isoler le détecteur et ainsi de permettre l'établissement des flux d'air sans perturbations parasites induites par des effets thermiques, par exemple liées à l'échauffement des faces éclairées par le laser. Le détecteur va être placé dans une première partie de la cuve et le tube d'aspiration va être inséré dans un orifice de la paroi 24 pour déboucher dans la deuxième partie de la cuve ; c'est dans cette deuxième partie que vont être réalisées les mesures de PIV. Un couvercle 25 (par exemple en verre) est positionné sur la deuxième partie de la cuve afin de confiner le milieu.

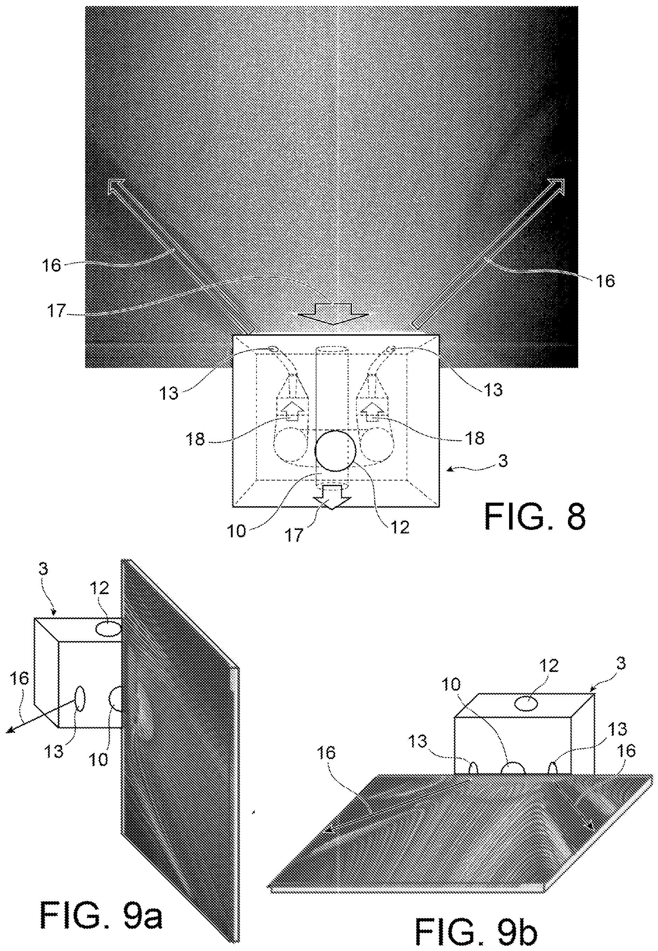

La figure 8 représente un modèle 3D d'un embout selon l'invention, superposé à une image d'une mesure de PIV (raccourcie en « image PIV » ci-après) obtenue à l'aide de la caméra vidéo. On a représenté, par deux grandes flèches 17, le sens de l'air aspiré dans le tube d'aspiration (orientées selon la direction d'aspiration). Cet air est aspiré dans le détecteur T-REX^{™}, qui n'est pas représenté. On a également représenté, par des petites flèches larges 18, le sens de l'air réinjecté dans l'embout et circulant dans les canaux secondaires ; on a aussi représenté, par de longues flèches étroites 16, les deux jets d'air expulsés de l'embout 3.

Dans l'image PIV, les zones sombres sont caractéristiques d'une absence de gouttelettes. On observe ainsi les jets latéraux produits par le nez sur l'image PIV.

Afin d'illustrer l'apport avantageux du dispositif d'aspiration optimisé selon l'invention équipant le détecteur T-REX^{™}, le mouvement de l'air en amont du tube d'aspiration a été mesuré selon trois cas de figure :
- pour un tube d'aspiration seul (sans embout), représentant l'état actuel du détecteur ;
- pour un tube équipé d'un embout selon l'invention, mais dont les jets n'ont pas été activés (l'air sortant de la pompe n'est pas réinjecté dans l'embout) ; et
- pour un tube équipé d'un embout selon l'invention avec les jets d'air activés.

Le débit d'aspiration a été maintenu identique dans les trois cas de figure.

En outre, afin de garantir une bonne mesure des flux d'air en amont du tube d'aspiration du détecteur, les flux ont été mesurés selon deux plans perpendiculaires comme représenté sur les figures 9a et 9b. On a ainsi un plan de mesure 19 obtenu en réalisant une mesure horizontale (figure 9a), la caméra vidéo étant placée latéralement par rapport à la cuve, comme illustré dans les figures 7a et 7b, et un plan de mesure 19 obtenu en réalisant une mesure verticale (figure 9b), la caméra vidéo étant placée au-dessus de la cuve. Dans ces figures 9a et 9b, on a représenté l'embout, l'image PIV obtenue, ainsi que la direction des jets. L'embout représenté dans ces figures 9a et 9b comporte deux sorties ayant une forme elliptique.

Les résultats des mesures de PIV montrent que la vitesse de l'air aspiré est significativement augmentée sur les deux plans lorsque l'embout est positionné sur le tube d'aspiration et qu'il émet des jets, par rapport au cas où le tube d'aspiration ne comporte pas d'embout ou lorsque l'embout est inactif (n'émet pas de jets).

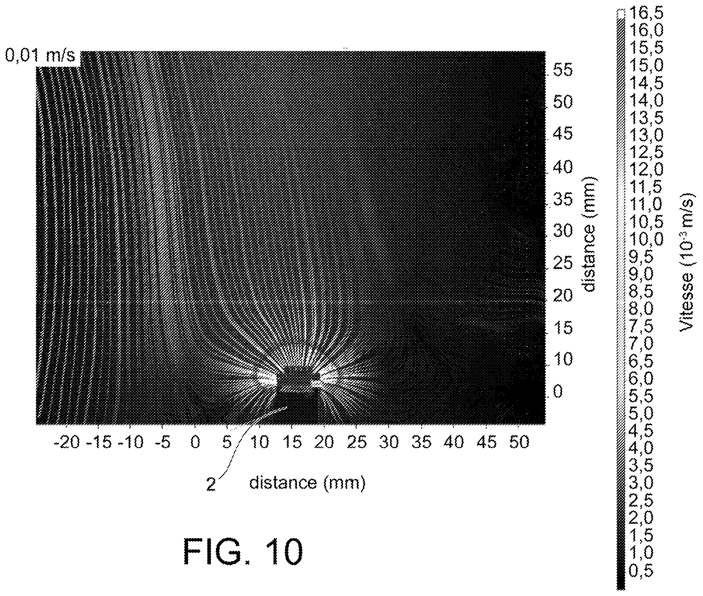

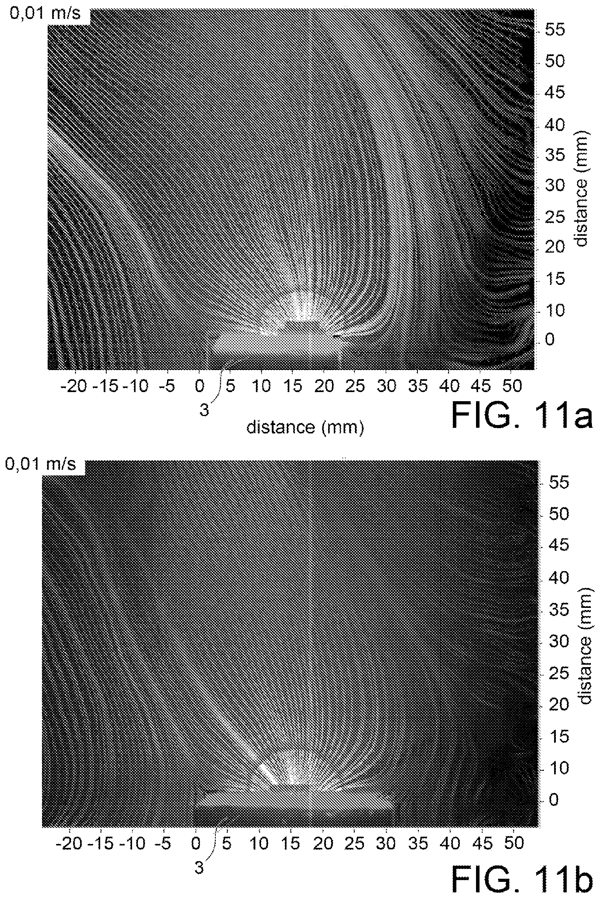

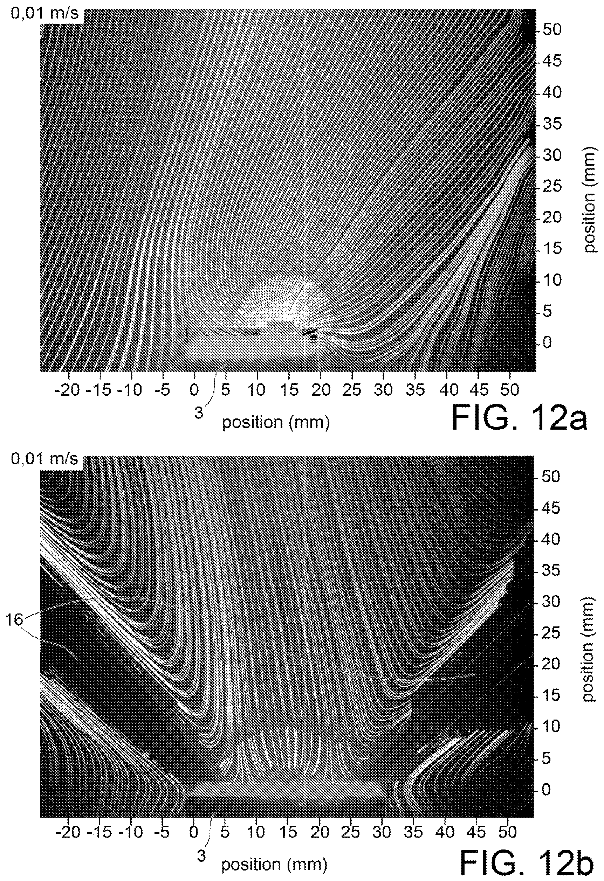

Les figures 10 à 12 montrent les lignes de flux (trajets parcourus par le fluide au cours du temps) et la vitesse du fluide pour un tube simple (figure 10) et pour un tube équipé de l'embout selon l'invention sans jets (figures 11a et 11b) et avec jets (figures 12a et 12b), selon chaque plan de mesure (mesure horizontale (figures 11a et 12a) ; mesure verticale (figures 11b et 12b)).

L'échelle de vitesse (échelle avec les gradations de couleurs affichée dans la figure 10) est la même pour toutes les figures 10 à 12 et est de 0,01 m/s.

On observe, sur la figure 10, que le tube 2 aspire l'air dans toutes les directions (les lignes de flux proches de l'orifice d'entrée du tube d'aspiration partent dans toutes les directions, y compris vers l'arrière).

Sur les figures 11a et 11b, on observe que l'embout, sans jet d'air activé, empêche tout de même le tube d'aspiration d'aspirer en arrière.

Sur les figures 12a et 12b, on observe que le confinement du flux d'aspiration permet, à débit d'aspiration égal par rapport aux figures 10 et 11, une plus grande vitesse du flux d'aspiration, et garantit une aspiration directionnelle permettant de n'échantillonner que la zone ciblée. De plus, la haute vitesse des jets sortant de l'embout crée un mouvement d'air global vers le détecteur, qui s'ajoute à l'aspiration causée par le tube d'aspiration. En fait, on superpose l'aspiration de l'embout et la directionnalité de l'aspiration (créée par les jets d'air) pour permettre un meilleur brassage (qui se traduit par la vitesse des flux) dans la zone à échantillonner.

Enfin, la mesure de la variation de la vitesse du flux d'air dans l'axe de mesure du détecteur (i.e. l'axe d'aspiration du tube), pour chaque cas de figure, permet d'illustrer davantage le bénéfice du dispositif d'optimisation selon l'invention.

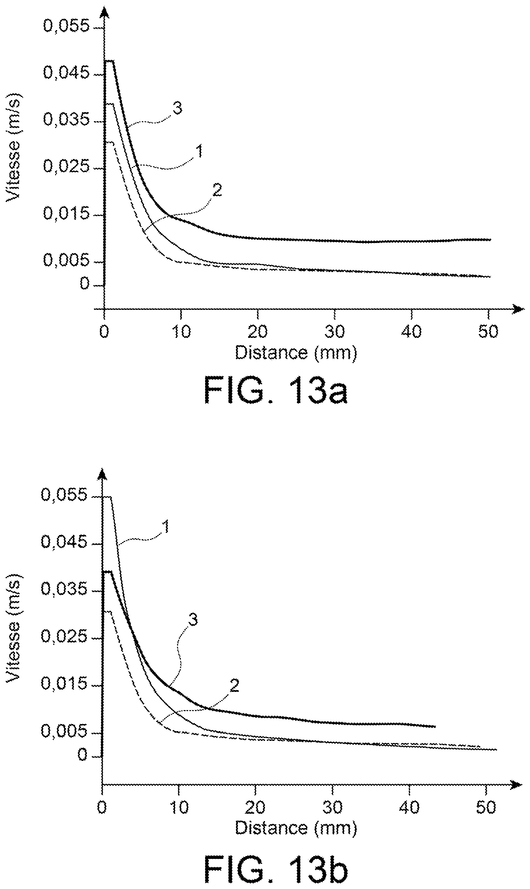

Les figures 13a et 13b permettent de visualiser la décroissance de la vitesse du fluide aspiré en fonction de la distance à l'orifice d'entrée du tube d'aspiration.

On observe, selon les deux plans de mesure (mesure horizontale (figure 13a) et mesure verticale (figure 13b)), que la vitesse d'aspiration est la plus élevée à proximité de l'embout d'aspiration (distance faible), où la mesure sature (on observe un plateau de la vitesse, dont la valeur n'est pas significative), puis qu'elle décroît progressivement avec la distance.

Si l'embout sans activation des jets (courbe 1) n'a qu'une faible incidence sur la vitesse d'aspiration à distance de l'embout par rapport à un tube seul (courbe 2), l'embout avec activation des jets (courbe 3) permet de diminuer significativement la décroissance de la vitesse avec la distance et ainsi d'aspirer l'air plus efficacement à plus grande distance du détecteur. En effet, par rapport à un tube seul, l'embout avec activation des jets permet d'augmenter la vitesse d'aspiration, à 40 mm de l'orifice d'entrée du tube d'aspiration équipé de l'embout, de 160 % pour la mesure verticale, et de 260 % pour la mesure horizontale. Par comparaison, ces vitesses d'aspiration sont obtenues respectivement à 7,6 mm et à 6 mm de l'orifice d'entrée du tube d'aspiration pour un tube seul.

On peut donc s'attendre à ce que la portée de détection d'un détecteur soit quadruplée lorsqu'il est équipé du dispositif d'optimisation selon l'invention.

### Références

[1] EP 2 673 617 B1
[2] Staymates M. E. et al., « Biomimetic Sniffing Improves the Detection Performance of a 3D Printed Nose of a Dog and a Commercial Trace Vapor Detector », Scientific3 Reports 6, article number : 36876 (2016)
[3] Ohashi M. et al., « Crayfish Robot That Generates Flow Field to Enhance Chemical Reception », Journal of Sensor Technology, 02(04), pages 185-195 (2012)

## Revendications

1. Ensemble optimisé pour une détection de composés volatils dans un fluide gazeux (27), comprenant :
- un détecteur (1) de vapeurs par aspiration, équipé d'un tube (2) d'aspiration, et
- un dispositif d'optimisation de prélèvement de vapeurs, destiné à être utilisé conjointement avec le détecteur (1) de vapeurs par aspiration, le dispositif comprenant :
- un embout (3) ayant un corps (9) muni :
- d'un canal traversant (10), s'étendant selon un axe d'une direction d'aspiration et destiné à accueillir le tube d'aspiration (2) ; et
- d'un réseau fluidique (11), qui comprend une entrée (12) et au moins une sortie (13) en communication fluidique avec ladite entrée (12), l'entrée et ladite au moins une sortie définissant entre elles un chemin d'écoulement (11) du fluide gazeux ; et
- des moyens d'injection, configurés pour injecter le fluide gazeux (27) dans le réseau fluidique (11) ;
dans lequel le réseau fluidique est configuré pour, lors de l'injection du fluide gazeux dans l'embout (3) par l'entrée (12) du réseau fluidique, former au moins un jet (4) de fluide gazeux qui est éjecté de l'embout de part et d'autre de la direction d'aspiration, chaque jet formant un angle θ, en valeur absolue, avec l'axe de la direction d'aspiration, qui est compris entre 10 et 90°, bornes incluses de sorte que le jet de fluide gazeux éjecté de l'embout s'éloigne de l'axe d'aspiration ;
et dans lequel le détecteur comprend une enceinte et **caractérisé en ce qu'**il comporte en outre une pompe (8), apte à aspirer le fluide gazeux dans l'enceinte au travers du tube d'aspiration, et dans lequel, lorsque l'ensemble optimisé est en cours de fonctionnement, l'embout est positionné sur le tube d'aspiration, et du fluide gazeux est simultanément aspiré dans l'enceinte, par la pompe, au travers du tube d'aspiration et injecté dans l'entrée (12) de l'embout par les moyens d'injection.

2. Ensemble optimisé selon la revendication 1, dans lequel les moyens d'injection comprenant une pompe, la pompe utilisée pour aspirer le fluide gazeux dans l'enceinte et la pompe utilisée pour injecter du fluide gazeux dans l'embout est une seule et même pompe (8).

3. Ensemble selon la revendication 2, dans lequel les moyens d'injection comportent une pompe (8), configurée pour aspirer le fluide gazeux, et un tuyau flexible (7), en communication fluidique avec la pompe, pour relier la pompe à l'entrée (12) de l'embout.

4. Ensemble selon l'une quelconque des revendications 1 à 3, dans lequel chaque jet forme un même angle θ , en valeur absolue, avec l'axe de la direction d'aspiration.

5. Ensemble selon l'une quelconque des revendications 1 à 4, dans lequel le réseau fluidique (11) comprend au moins deux sorties (13), deux sorties (13) étant positionnées à une même hauteur qu'une extrémité du canal traversant (10), le réseau fluidique (11) étant configuré pour que les jets (4) sortant de ces deux sorties (13) appartiennent à un même plan, ledit plan comprenant également la direction d'aspiration.

6. Ensemble selon l'une quelconque des revendications 1 à 5, dans lequel le réseau fluidique (11) comprend au moins deux sorties (13) et comporte un canal principal (14) qui se divise en au moins deux canaux secondaires (15), dont deux canaux secondaires sont symétriques par rapport à un plan qui comporte le canal traversant (10).

7. Ensemble selon la revendication 6, dans lequel les canaux secondaires ont une section en coupe qui est constante.

8. Ensemble selon la revendication 6, dans lequel les canaux secondaires ont une section en coupe qui se réduit à proximité des sorties (13).

9. Ensemble selon l'une quelconque des revendications 1 à 8, dans lequel les sorties (13) ont une forme elliptique, de préférence circulaire.

10. Ensemble selon l'une quelconque des revendications 1 à 9, dans lequel la sortie (13) est définie par une surface évidée entre deux formes concentriques et centrées sur le canal traversant, les deux formes étant des ellipses, de préférence des cercles, ou des polygones.

11. Procédé d'optimisation d'un prélèvement de vapeurs pour détecter des composés volatils dans un fluide gazeux, utilisant un ensemble selon l'une quelconque des revendications 1 à 10, le procédé comprenant :
- la mise en place préalable du tube (2) d'aspiration dans le canal traversant (10) de l'embout (3) ;
- la formation d'au moins un jet de part et d'autre de la direction d'aspiration par une aspiration du fluide gazeux dans l'enceinte à travers le tube d'aspiration et, simultanément, une injection du fluide gazeux dans l'entrée (12) du réseau fluidique (11), ce qui provoque une éjection du fluide gazeux par ladite au moins une sortie sous la forme d'au moins un jet (4).

12. Procédé selon la revendication 11, dans lequel l'aspiration et l'injection sont réalisées à l'aide d'une seule et même pompe (8).

## Patentansprüche

1. Optimierte Anordnung zum Nachweis flüchtiger Verbindungen in einem gasförmigen Fluid (27), umfassend:
- einen Ansaug-Dampfdetektor (1), der mit einem Ansaugrohr (2) ausgestattet ist, und
- eine Vorrichtung zum Optimieren der Dampfentnahme, die dazu bestimmt ist, zusammen mit dem Ansaug-Dampfdetektor (1) verwendet zu werden, wobei die Vorrichtung umfasst:
- ein Endstück (3), das einen Körper (9) besitzt, der versehen ist mit:
- einem Durchgangskanal (10), der sich entlang einer Achse einer Ansaugrichtung erstreckt und dazu bestimmt ist, das Ansaugrohr (2) aufzunehmen; und
- einem Fluidnetz (11), das einen Einlass (12) und mindestens einen Auslass (13) in Fluidkommunikation mit dem Einlass (12) umfasst, wobei der Einlass und der mindestens eine Auslass zwischen sich einen Strömungspfad (11) für das gasförmige Fluid definieren; und
- Einspritzmittel, die dazu ausgelegt sind, das gasförmige Fluid (27) in das Fluidnetz (11) einzuspritzen;
wobei das Fluidnetz dazu ausgelegt ist, bei dem Einspritzen des gasförmigen Fluids in das Endstück (3) durch den Einlass (12) des Fluidnetzes mindestens einen Strahl (4) gasförmigen Fluids zu bilden, der von dem Endstück auf beiden Seiten der Ansaugrichtung ausgestoßen wird, wobei jeder Strahl mit der Achse der Ansaugrichtung einen Winkel θ, im Absolutwert, bildet, in dem Bereich zwischen 10 und 90°, Grenzwerte eingeschlossen, liegt, sodass der Strahl gasförmigen Fluids, der aus dem Endstück ausgestoßen wird, sich von der Ansaugachse entfernt;
und wobei der Detektor ein Gehäuse umfasst und **dadurch gekennzeichnet ist, dass** er ferner eine Pumpe (8) aufweist, die in der Lage ist, das gasförmige Fluid durch das Ansaugrohr in das Gehäuse zu saugen, und wobei, wenn sich die optimierte Anordnung in Betrieb befindet, das Endstück auf dem Ansaugrohr positioniert ist, und gasförmiges Fluid gleichzeitig von der Pumpe durch das Ansaugrohr in das Gehäuse gesaugt und durch die Einspritzmittel in den Einlass (12) des Endstücks eingespritzt wird.

2. Optimierte Anordnung nach Anspruch 1, wobei die Einspritzmittel eine Pumpe umfassen, wobei die Pumpe, die verwendet wird, um das gasförmige Fluid in das Gehäuse zu saugen, und die Pumpe, die verwendet wird, um gasförmiges Fluid in das Endstück einzuspritzen, ein und dieselbe Pumpe (8) ist.

3. Anordnung nach Anspruch 2, wobei die Einspritzmittel eine Pumpe (8), die dazu ausgelegt ist, das gasförmige Fluid anzusaugen, und einen flexiblen Schlauch (7) aufweisen, der mit der Pumpe in Fluidkommunikation steht, um die Pumpe mit dem Einlass (12) des Endstücks zu verbinden.

4. Anordnung nach einem der Ansprüche 1 bis 3, wobei jeder Strahl mit der Achse der Ansaugrichtung denselben Winkel θ, im Absolutwert, bildet.

5. Anordnung nach einem der Ansprüche 1 bis 4, wobei das Fluidnetz (11) mindestens zwei Auslässe (13) umfasst, wobei zwei Auslässe (13) auf derselben Höhe wie ein Ende des Durchgangskanals (10) positioniert sind, wobei das Fluidnetz (11) so ausgelegt ist, dass die aus diesen zwei Auslässen (13) austretenden Strahle (4) zu derselben Ebene gehören, wobei die Ebene auch die Ansaugrichtung umfasst.

6. Anordnung nach einem der Ansprüche 1 bis 5, wobei das Fluidnetz (11) mindestens zwei Auslässe (13) umfasst und einen Hauptkanal (14) aufweist, der sich in mindestens zwei Sekundärkanäle (15) teilt, von denen zwei Sekundärkanäle im Bezug auf eine Ebene, die den Durchgangskanal (10) aufweist, symmetrisch sind.

7. Anordnung nach Anspruch 6, wobei die Sekundärkanäle einen Querschnitt besitzen, der konstant ist.

8. Anordnung nach Anspruch 6, wobei die Sekundärkanäle einen Querschnitt besitzen, der sich in der Nähe der Auslässe (13) verringert.

9. Anordnung nach einem der Ansprüche 1 bis 8, wobei die Auslässe (13) eine elliptische, vorzugsweise kreisrunde, Form besitzen.

10. Anordnung nach einem der Ansprüche 1 bis 9, wobei der Auslass (13) durch eine ausgehöhlte Fläche zwischen zwei konzentrischen und auf dem Durchgangskanal zentrierten Formen definiert ist, wobei die zwei Formen Ellipsen, vorzugsweise Kreise, oder Polygone sind.

11. Verfahren zum Optimieren einer Dampfentnahme zum Nachweis flüchtiger Verbindungen in einem gasförmigen Fluid unter Verwendung einer Anordnung nach einem der Ansprüche 1 bis 10, wobei das Verfahren umfasst:
- das vorhergehende Einsetzen des Ansaugrohrs (2) in den Durchgangskanal (10) des Endstücks (3);
- das Bilden mindestens eines Strahl auf beiden Seiten der Ansaugrichtung durch Ansaugen des gasförmigen Fluids durch das Ansaugrohr in das Gehäuse und gleichzeitiges Einspritzen des gasförmigen Fluids in den Einlass (12) des Fluidnetzes (11), was einen Ausstoß des gasförmigen Fluids in Form mindestens eines Strahls (4) durch den mindestens einen Auslass bewirkt.

12. Verfahren nach Anspruch 11, wobei das Ansaugen und das Einspritzen mit Hilfe ein und derselben Pumpe (8) erfolgt.

## Claims

1. Optimised assembly for detecting volatile compounds in a gaseous fluid (27), comprising:
- a detector (1) for detecting vapours by suction, equipped with a suction tube (2), and
- a vapour-sampling optimisation device, intended to be used in conjunction with the detector (1) for detecting vapours by suction, the device comprising:
- an end piece (3) having a body (9) provided with:
- a through-passage (10), extending along an axis in a suction direction and intended to accept the suction tube (2); and
- a fluidic network (11), which comprises an inlet (12) and at least one outlet (13) in fluidic communication with said inlet (12), the inlet and said at least one outlet between them defining a gaseous-fluid flow path (11); and
- injection means, configured to inject the gaseous fluid (27) into the fluidic network (11);
wherein the fluidic network is configured to, when the gaseous fluid is injected into the end piece (3) via the inlet (12) of the fluidic network, form at least one jet (4) of gaseous fluid which is ejected from the end piece on either side of the suction direction, each jet forming an angle θ, in absolute value, with the axis of the suction direction, which is between 10 and 90°, inclusive, so that the jet of gaseous fluid ejected from the end piece moves away from the suction axis;
and wherein the detector comprises a chamber and **characterized in that** it further comprises a pump (8), capable of sucking the gaseous fluid into the chamber through the suction tube, and wherein, when the optimised assembly is operating, the end piece is positioned on the suction tube, and the gaseous fluid is simultaneously sucked into the chamber, by the pump, through the suction tube and injected into the inlet (12) of the end piece by the injection means.

2. Optimised assembly according to claim 1, wherein the injection means comprising a pump, the pump used for sucking the gaseous fluid into the chamber and the pump used to inject the gaseous fluid into the end piece is one and the same pump (8).

3. Assembly according to claim 2, wherein the injection means include a pump (8), configured to suck in the gaseous fluid, and a hose (7), in fluidic communication with the pump, to connect the pump to the inlet (12) of the end piece.

4. Assembly according to any one of claims 1 to 3, wherein each jet forms the same angle θ, in absolute value, with the axis of the suction direction.

5. Assembly according to any one of claims 1 to 4, wherein the fluidic network (11) comprises at least two outlets (13), two outlets (13) being positioned at the same height as one end of the through-passage (10), the fluidic network (11) being configured in order that the jets (4) coming out of these two outlets (13) belong to the same plane, said plane also comprising the suction direction.

6. Assembly according to any one of claims 1 to 5, wherein the fluidic network (11) comprises at least two outlets (13) and includes a main channel (14) that splits into at least two secondary channels (15), of which two secondary channels are symmetrical in relation to a plane that includes the through-passage (10).

7. Assembly according to claim 6, wherein the secondary channels have a cross section that is constant.

8. Assembly according to claim 6, wherein the secondary channels have a cross section that reduces near the outlets (13).

9. Assembly according to any one of claims 1 to 8, wherein the outlets (13) have an elliptical, preferably circular, shape.

10. Assembly according to any one of claims 1 to 9, wherein the outlet (13) is defined by a hollowed surface between two concentric shapes and centred on the through-passage, the two shapes being ellipses, preferably circles, or polygons.

11. Vapour-sampling optimisation method for detecting volatile compounds in a gaseous fluid, using an assembly according to any one of claims 1 to 10, the method comprising:
- placing the suction tube (2) in advance in the through-passage (10) of the end piece (3);
- forming at least one jet on either side of the suction direction by sucking the gaseous fluid into the chamber through the suction tube and, simultaneously, injecting the gaseous fluid into the inlet (12) of the fluidic network (11), which causes an ejection of the gaseous fluid via said at least one outlet in the form of at least one jet (4).

12. Method according to claim 11, wherein the suction and the injection are performed using one and the same pump (8).
